# EUROPEAN PATENT APPLICATION

(11) **EP 4 089 417 A1**
(43) Date of publication of application: **16.11.2022**
(21) Application number: 20911316.6
(22) Date of filing: 11.11.2020
(51) Int. Cl.: G01N 35/00

(54) **AUTOMATIC ANALYSIS DEVICE, DISPLAY SYSTEM OF AUTOMATIC ANALYSIS DEVICE, AND METHOD FOR CARRYING OUT DISPLAY IN AUTOMATIC ANALYSIS DEVICE**

(30) Priority: 07.01.2020 JP 2020001085
(71) Applicant: Hitachi High-Tech Corporation, Minato-ku Tokyo 105-6409 (JP)
(72) Inventor: SHIBA Kazuaki, Tokyo 105-6409 (JP); YOKOTSUKA Satoshi, Tokyo 105-6409 (JP); AKUTSU Masashi, Tokyo 105-6409 (JP); CHIKAHISA Masaki, Tokyo 105-6409 (JP)
(74) Representative: Strehl Schübel-Hopf & Partner
(86) International application number: PCT/JP2020/042016
(87) International publication number: WO 2021/140741

(57) **Abstract**

A first screen for displaying information of at least two analysis modules and a second screen for displaying information of only the specific analysis module among the analysis modules are separately displayed based on at least one piece of information among angle information of a display section, position information of the display section, and information of an operation performed on the analysis modules. Thus, the screen corresponding to a situation of an automatic analysis device can be accurately and reliably provided by a user as compared with the conventional one.

## Description

### Technical Field

The present invention relates to an automatic analysis device for quantitative and qualitative analysis of a biological specimen (hereinafter, referred to as specimen or sample) such as blood, plasma, serum, urine and other body fluids, a display system of the automatic analysis device, and a display method in the automatic analysis device.

### Background Art

As an example of an automatic analysis device in which the information displayed on a display device is easily and reliably confirmed while performing the analysis of a specimen, JP-A-2010-223810 (PTL 1) describes that a rail is laid on the main body of the device in the direction of arrangement of a specimen insertion section, an analysis section and the like, a display device is movably mounted on the rail, and a plurality of position detection sensors for detecting the current position of the display device are arranged on the rail, detection position information indicating the current position of the display device detected by one of the above position detection sensors is supplied to a control device, in the control device, a situation information screen is created to show the current situation of a specimen or reagent in the main body of the device corresponding to the current position of the display device and supplied to the display device.

### Citation List

### Patent Literature

PTL 1: JP-A-2010-223810

### Summary of Invention

### Technical Problem

Automatic analysis devices that automatically perform quantitative and qualitative analysis of specimens such as blood and urine are used in many medical institutions, especially hospitals and clinical inspection centers that need to process many patient specimens in a short time.

As such an automatic analysis device, various automatic analysis devices in large, medium and small size are developed in accordance with the processing capabilities required by each facility.

A software element for supporting the automatic analysis device is software for operation sections and a control section, and an item requested by a user or a designated setting in the operation section is enabled when the control sections operate each mechanism in the device according to the user's instruction at the time of analysis.

In a display section which is one of the operation sections, setting of a request item at the time of analysis, setting of a parameter at the time of maintenance, and the like can be determined, and the state of the module which is difficult to visually understand, such as the remaining amount of a reagent, the progress of maintenance, and the like, is displayed and visualized. Consequently, the user can execute the operation and work necessary for analysis while grasping the state of the device through the display section.

Also, the user can operate while alternately looking at the display information of the display section and the operation of the device at the time of setting or analysis. At this time, the user can change the display contents by operating with check boxes or combo boxes in the screen of the display section.

However, it is complicated for the user to perform such screen operations in parallel with operations necessary for analysis and work, which may lead to errors.

As a technique for reducing the trouble of a user operating in a display section, PTL 1 describes a configuration in which a status information screen to be displayed on the display section by a control section is changed corresponding to the current position of the display section detected by a position detection sensor or the current position of the user.

By the way, as the automatic analysis device, there is an integrated automatic analysis device which improves processing capability and the like by integrating a plurality of analysis modules by using a set of devices configured with a single analysis device and a device performing a pre-analytical operation of the analysis device as a module.

In recent years, the connected analysis modules are not limited to the same type, and the types thereof are becoming more diversified. For example, there are a biochemical analysis module for measuring cholesterol or the like in the blood, and an immunological analysis module for measuring infectious diseases or the like, and there is also a device for connecting a plurality of different or similar types of analysis modules. As a result, the flow of measuring various items is changed from only measuring a large number of specimens.

With the increased number of measurement items due to complex analysis modules, in an automatic analysis device configured with a plurality of modules, an amount of information displayed on the display section such as reagent information on the measurement items is increased, and the user cannot grasp the display contents at a glance.

In particular, in the automatic analysis device integrates a plurality of modules, as the user work on a specific module alone while unnecessary information is displayed, there is a risk of erroneous operation, and therefore the demand to provide the user with only the necessary information accurately is very high.

Also, depending on the display items, it is possible that only a part of the information is required. On the other hand, for example, in some cases, the information of the plurality of analysis modules needs to be instantly grasped on a reagent screen as in the case where the remaining amount of the reagent of a particular module needs to be grasped on the reagent screen during analysis and then the state of the reagent of other modules needs to be grasped collectively.

According to the method described in PTL 1, only information of a specific module can be simply displayed as described above.

However, in the technique described in PTL 1, a dedicated screen is created for each module each time. For this reason, when a user wants to grasp information of a plurality of modules, the user needs to perform an operation for displaying a screen including information of the plurality of modules, and therefore a configuration for displaying the screen including information of the plurality of modules more simply is required.

That is, since the operation of properly switching the display range according to each case by the user is complicated, and it is more difficult to quickly grasp the configuration of the device and the whole system, it became clear that there was room to reduce the burden of the user.

The present invention provides an automatic analysis device, a display system of the automatic analysis device and a display method in the automatic analysis device that are capable of providing a user with a screen corresponding to the situation of the automatic analysis device more accurately and reliably compared to the related art.

### Solution to Problem

The present invention includes several means for solving the above problem, but for one example, includes at least two or more analysis modules for analyzing a specimen, a display section for displaying information of the analysis modules, and a control section for controlling operations of the analysis modules and the display section, in which the control section displays a first screen for displaying information of at least two analysis modules and a second screen for displaying information of only a specific analysis module among the analysis modules separately based on at least one piece of information among position information of the display section, angle information of the display section, and information of an operation performed on the analysis modules.

### Advantageous Effects of Invention

According to the present invention, a screen corresponding to the situation of an automatic analysis device can be provided more accurately and surely to a user compared to the related art. Other issues, configurations, and effects other than those mentioned above are clarified by the description of the following examples.

### Brief Description of Drawings

[Fig. 1] Fig. 1 is a top view showing an outline of an overall configuration of an automatic analysis device according to Example 1 of the present invention.
[Fig. 2] Fig. 2 is a front view showing an outline of the overall configuration of the automatic analysis device according to Example 1.
[Fig. 3] Fig. 2 is a view for illustrating an outline of a first screen on a reagent information display screen of the automatic analysis device according to Example 1.
[Fig. 4] Fig. 4 is a view for illustrating an outline of a second screen related to an analysis module 207 in the automatic analysis device according to Example 1.
[Fig. 5] Fig. 5 is a view for illustrating the outline of the second screen related to an analysis module 107 in the automatic analysis device according to Example 1.
[Fig. 6] Fig. 6 is a view for illustrating an outline of a maintenance screen of the automatic analysis device according to Example 1.
[Fig. 7] Fig. 7 is a view for illustrating the outline of the first screen on the maintenance screen of a specimen dispensing nozzle of the automatic analysis device according to Example 1.
[Fig. 8] Fig. 8 is a view for illustrating the outline of the first screen of a state monitoring screen of the specimen dispensing nozzle of the automatic analysis device according to Example 1.
[Fig. 9] Fig. 9 is a view for illustrating the outline of the second screen related to maintenance of the specimen dispensing nozzle of the analysis module 207 in the automatic analysis device according to Example 1.
[Fig. 10] Fig. 10 is a view for illustrating the outline of the second screen related to the maintenance of the specimen dispensing nozzle of the analysis module 107 in the automatic analysis device according to Example 1.
[Fig. 11] Fig. 11 is a view for illustrating an outline of an analysis setting screen in the automatic analysis device according to Example 1.
[Fig. 12] Fig. 12 is a view for illustrating an outline of a screen transition setting screen in the automatic analysis device according to Example 1.
[Fig. 13] Fig. 13 is a view for illustrating the outline of the screen transition setting screen in the automatic analysis device according to Example 1.
[Fig. 14] Fig. 14 is a flowchart showing a flow from start of a screen to display of the first screen or the second screen in the automatic analysis device according to Example 1.
[Fig. 15] Fig. 15 is a view for illustrating a method for transitioning to a second screen related to the analysis module 207 in an automatic analysis device according to Example 2 of the present invention.
[Fig. 16] Fig. 16 is a view for illustrating the method for transitioning to the second screen related to the analysis module 107 in the automatic analysis device according to Example 2.

### Description of Embodiments

Hereinafter, examples of an automatic analysis device, a display system of the automatic analysis device, and a display method in the automatic analysis device are described with reference to drawings.

### <Example 1>

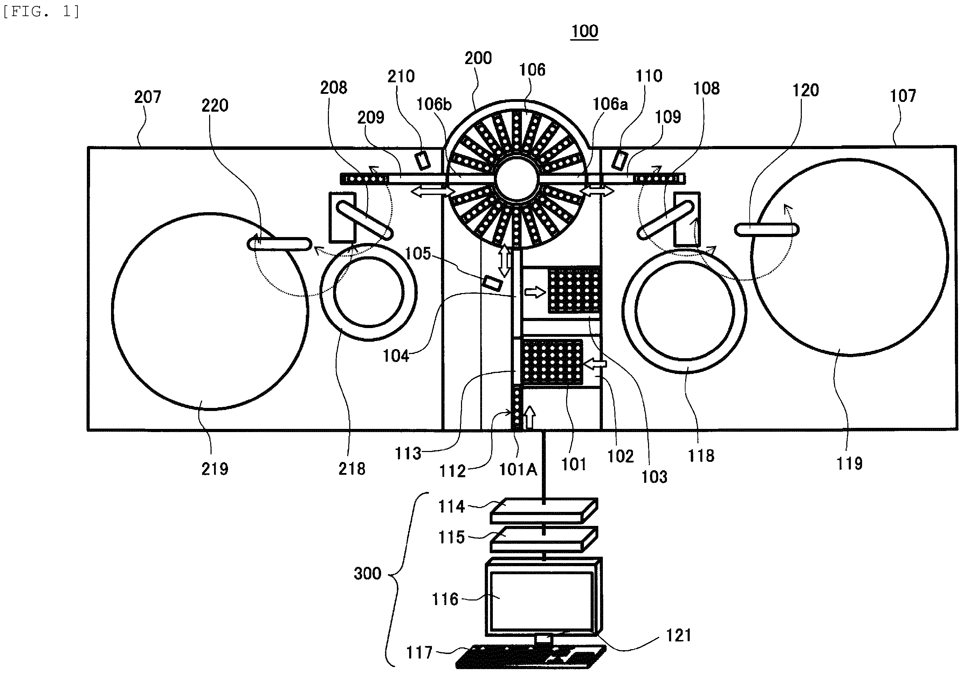

Example 1 of an automatic analysis device, a display system of the automatic analysis device, and a display method in the automatic analysis device is described with reference to Figs. 1 to 14.

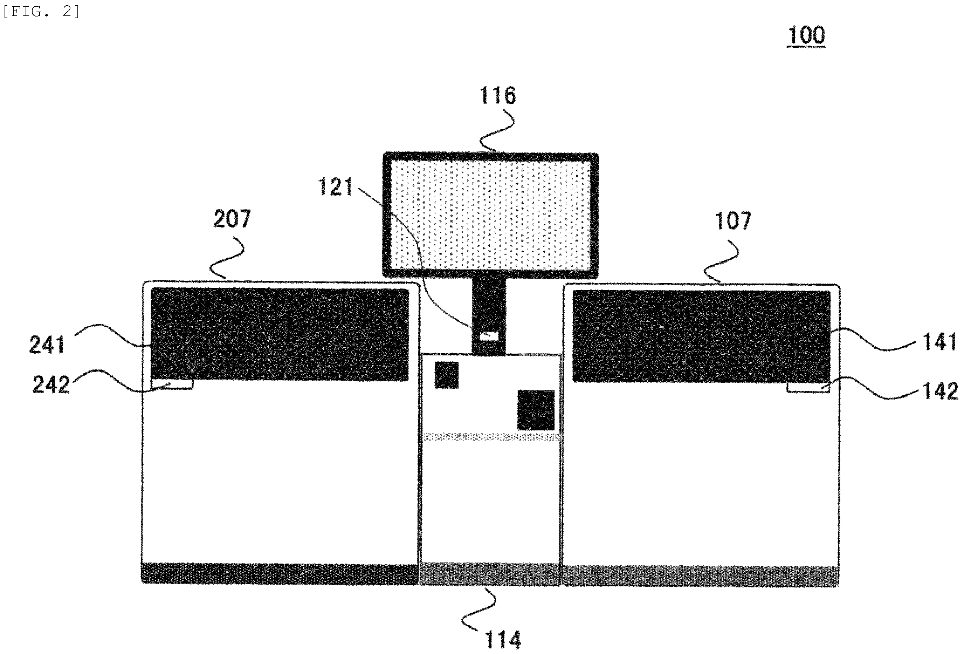

First, an example of the overall configuration of an automatic analysis device is described with reference to Figs. 1 and 2. Figs. 1 and 2 are views illustrating the overall configuration of the automatic analysis device according to the present example, Fig. 1 illustrates an outline when viewed from the top, and Fig. 2 illustrates an outline when viewed from the front.

An automatic analysis device 100 of the present example shown as an example in Fig. 1 is roughly configured with a plurality of analysis modules 107 and 207 (two modules in the present example), a sampler module 200 for conveying a specimen rack mounted with one or more specimen containers containing a specimen to be analyzed in these analysis modules 107 and 207.

Here, one or more specimen containers containing a specimen to be qualitatively and quantitatively analyzed in the analysis modules 107 and 207 are mounted on the specimen rack.

The specimen rack includes at least a specimen rack (hereinafter, simply referred to as a specimen rack 101) mounted with a specimen container containing a specimen (normal specimen) to be analyzed with a normal priority and a specimen rack mounted with a specimen container containing an emergency specimen with higher emergency of analysis and measurement than the specimen rack 101 (hereinafter, an emergency specimen rack 101A is described, especially when distinguishing from the specimen rack 101).

The sampler module 200 is a module for conveying the specimen rack 101 to be charged to the automatic analysis device 100 to and from the analysis modules 107 and 207, and includes a specimen rack supply section 102, an emergency specimen rack charging section 112, a conveyance line 104, an emergency specimen rack standby area 113, a specimen identification device 105, a rack rotor 106, and a specimen rack storage section 103, and the like.

The conveyance line 104 is, for example, a belt conveyer type conveyance mechanism for conveying the specimen rack 101 or the emergency specimen rack 101A in a reciprocating manner.

The emergency specimen rack charging section 112 is provided adjacent to the conveyance line 104 and is a region for charging the emergency specimen rack 101A.

The specimen rack supply section 102 is provided adjacent to the conveyance line 104 on one end side of the conveyance line 104 from the emergency specimen rack charging section 112, and is a region for supplying the specimen rack 101 with a normal specimen.

The specimen rack storage section 103 is provided adjacent to the conveyance line 104 on one end side of the conveyance line 104 from the specimen rack supply section 102, and is a region for storing the specimen rack 101.

The emergency specimen rack standby area 113 is provided on the conveyance line 104 on the other end side of the conveyance line 104 from than the specimen rack storage section 103, and is a region for temporarily putting the emergency specimen rack 101A on standby.

The specimen identification device 105 is a mechanism for reading and identifying an identification medium (not illustrated) such as an RFID and a barcode provided in the specimen rack 101 and the specimen container in order to query the analysis request information on the specimen contained in the specimen container mounted on the specimen rack 101 to be conveyed through the conveyance line 104.

The rack rotor 106 is disposed at one end of the conveyance line 104. The rack rotor 106 includes one or more slots 106a and 106b capable of mounting the specimen rack 101 or the like, and is a mechanism for transferring the specimen rack 101 or the like between one end of the conveyance line 104 and one end of dispensing lines 109 and 209 of the analysis modules 107 and 207.

For example, the rack rotor 106 is structured to rotate clockwise and counterclockwise, and the rotational operation thereof is appropriately controlled so as to start processing in the order in which the specimen rack 101 is charged, or to start processing before a previously placed specimen rack 101 if the specimen rack 101 with a higher priority is charged.

The analysis modules 107 and 207 are units for performing qualitative and quantitative analysis by sampling (dispensing) a specimen contained in the specimen container mounted on the specimen rack 101, and include the dispensing lines 109 and 209, specimen identification devices 110 and 210, reaction disks 118 and 218, specimen dispensing mechanisms 108 and 208, reagent disks 119 and 219, reagent dispensing mechanisms 120 and 220, a measurement section (not illustrated) and the like, respectively.

The dispensing lines 109 and 209 employ a conveyance mechanism for performing a reciprocating operation of drawing the specimen rack 101 from the sampler module 200 to the analysis modules 107 and 207 and delivering the specimen rack 101 from the analysis modules 107 and 207 to the sampler module 200. For example, a belt conveyor type mechanism is provided.

A case in which a belt conveyor type conveyance mechanism is employed as the dispensing lines 109 and 209 is illustrated, but a configuration for conveying a projection structure driven along the dispensing lines 109 and 209 by fitting the same in a recessed section provided in advance in the specimen rack 101 can be employed. The conveyance line 104 has the same configuration.

The specimen identification devices 110 and 210 are provided adjacent to the other end sides of the dispensing lines 109 and 209, and are mechanisms for reading and identifying an identification medium (not illustrated) such as an RFID and a barcode provided in the specimen rack 101 and the specimen container in order to query the analysis request information on the specimen contained in the specimen rack 101 carried into the dispensing lines 109 and 209.

The specimen dispensing mechanisms 108 and 208 are mechanisms for dispensing a specimen from the specimen container of the specimen rack 101 conveyed to the dispensing positions on the dispensing lines 109 and 209 into the reaction containers of the reaction disks 118 and 218.

The reagent dispensing mechanisms 120 and 220 are mechanisms for dispensing a reagent contained in the reagent containers of the reagent disks 119 and 219 into the reaction containers of the reaction disks 118 and 218.

The measurement section is a mechanism for measuring a mixture (reaction solution) of a specimen and a reagent dispensed into a reaction container to perform qualitative and quantitative analysis.

In the present example, the analysis module 107 is assumed as a unit for biochemical inspection and the analysis module 207 is assumed as a unit for immunological inspection, and in this case, the purpose and processing capability of the inspection are different.

In addition, a measurement unit for measuring electrolyte concentration can be provided in the analysis module 107, and a measurement unit for blood coagulation analysis or the like can be appropriately disposed in each module according to the specification environment.

Further, when the purposes (inspection items) are the same, a plurality of analysis modules can be configured to maintain the same processing capability by the same analysis module, and when only the purposes are different, a plurality of different analysis modules can be configured to be connected.

A control device 300 is a device for controlling the overall operation of the automatic analysis device 100, including respective devices of the analysis modules 107 and 207 and the sampler modules 200, and is a computer provided with a CPU, a memory, and the like.

The control device 300 is configured with a display section 116, an input device 117, a storage section 115, a control section 114, and the like.

The display section 116 is a display device such as a liquid crystal display for displaying information such as an input screen with various parameters and settings, analysis inspection data of first inspection or re-inspection, measurement results, and displaying various information such as information related to maintenance of the analysis modules 107 and 207 and the sampler module 200. The display device can be configured with a touch panel type display device which also serves as the input device 117 described later.

In the present example, since the display section 116 is located in the center of the automatic analysis device 100, the direction of the display section 116 is configured to be rotatable to the immunological analysis module 207 side or the biochemical analysis module 107 side. When tilted toward the immunological analysis module 207 side by a predetermined angle or more, the display section is made to correspond to the immunological analysis module 207 or when tilted to the biochemical analysis module 107 by a predetermined angle or more, the display section is made to correspond to the biochemical analysis module 107. As an example, a predetermined angle is set to 30°.

For this purpose, the display section 116 of the present example is provided with an angle detector 121 for detecting a rotation angle indicating in which direction the display section 116 is rotated between the analysis module 107 and the analysis module 207 when the down direction in Fig. 1 is set as a reference angle.

The input device 117 is configured with a keyboard or a mouse for inputting various kinds of data such as various parameters, settings, analysis request information, instructions for start of analysis and the like.

The storage section 115 is a recording medium such as a semiconductor memory such as a flash memory or a magnetic disk such as an HDD which records measurement results of a specimen charged into the automatic analysis device 100 and analysis request information of the specimen contained in the specimen container mounted on each specimen rack. The storage section 115 also records various parameters and setting values for controlling the operation of each device in the automatic analysis device 100, various computer programs for executing various processing described later.

The control section 114 is a portion for controlling the overall operation of the automatic analysis device 100 including the control device 300, the analysis modules 107 and 207, and the sampler module 200, and is the CPU or the like.

In the present example, the control section 114 displays a first screen for displaying information of the analysis modules 107 and 207 and a second screen for displaying information of only a specific analysis module 107 or 207 among the analysis modules 107 and 207 based on the angle information of the display section 116 detected by the angle detector 121.

In the first screen and the second screen, at least one of the reagent information among the remaining amount of the reagent required for analysis, the validity period of the reagent, and the target module using the reagent is displayed.

Further, maintenance information including the progress status of the maintenance of the analysis modules 107 and 207 is displayed on the first screen among the first screen and the second screen, and maintenance information including the progress status of the maintenance of a specific analysis module 107 or 207 is displayed on the second screen.

Also, the control section 114 displays a setting screen for selecting between a screen in which the first screen and the second screen are displayed separately and a screen in which the first screen and the second screen are displayed together, on the display section 116.

These details will be described later with reference to the respective drawings.

The general configuration of the automatic analysis device 100 is described as above.

The analysis processing of a specimen by the automatic analysis device 100 is generally performed in the following order.

An operator gives an analysis instruction to the automatic analysis device 100 by using the display section 116 and the input device 117. The analysis instruction is stored in the storage section 115 and transmitted through the control device 300 to a target analysis module among the sampler module 200 and analysis modules 107 and 207.
According to the received analysis instruction, the target module performs an analysis operation as follows.

The sampler module 200 feeds the specimen racks 101 installed in the specimen rack supply section 102 one by one onto the conveyance line 104 and carries the same into the rack rotor 106.

The specimen rack 101 conveyed to the rack rotor 106 is conveyed to the dispensing line 109 of the analysis module 107 or the dispensing line 209 of the analysis module 207 according to a measurement item requested by the control device 300.

As the specimen racks 101 arrive at the dispensing line 109 or 209, a dispensing operation is performed on each specimen mounted on the specimen rack 101 by the specimen dispensing mechanism 108 or 208.

If the measurement item is a biochemical item, the specimen dispensing mechanism 108 discharges the sucked specimen to the reaction container on the reaction disk 118. And then, the reagent sucked from the reagent disk 119 is further added to the reaction container by the reagent dispensing mechanism 120 and stirred. And then, the absorbance or the like is measured by the measurement section, and the measurement results are transmitted to the control section 114 of the control device 300.

The reaction container used in the analysis is cleaned with water, alkaline detergent, and acid detergent dispensed from the cleaning mechanism (not illustrated) and used for the next analysis.

Also, if the measurement item is an immunological item, the reagent sucked from the reagent disk 219 is discharged into the reaction container on the reaction disk 218 by the reagent dispensing mechanism 220, and a specimen is added to the reaction container by the specimen dispensing mechanism 208 and stirred. And then, after performing processing such as magnetic separation as necessary, the measurement results of the measurement section are transmitted to the control section 114 of the control device 300.

The control section 114 obtains the concentration of a specific component in a specimen by arithmetic processing from the transmitted measurement results, and performs processing such as displaying the result on the display section 116 or the like or storing the same in the storage section 115.

The display section 116 is installed on the upper surface of the sampler module 200 as shown in Fig. 2.

A top cover 141 is installed on the upper part of the biochemical analysis module 107 and a top cover 241 is installed on the upper part of the immunological analysis module 207. The top covers 141 and 241 can be opened and closed, and the top view in an open state is shown in Fig. 1. Also, opening/closing detectors 142 and 242 for detecting the opening of the top covers 141 and 241 are installed in the device.

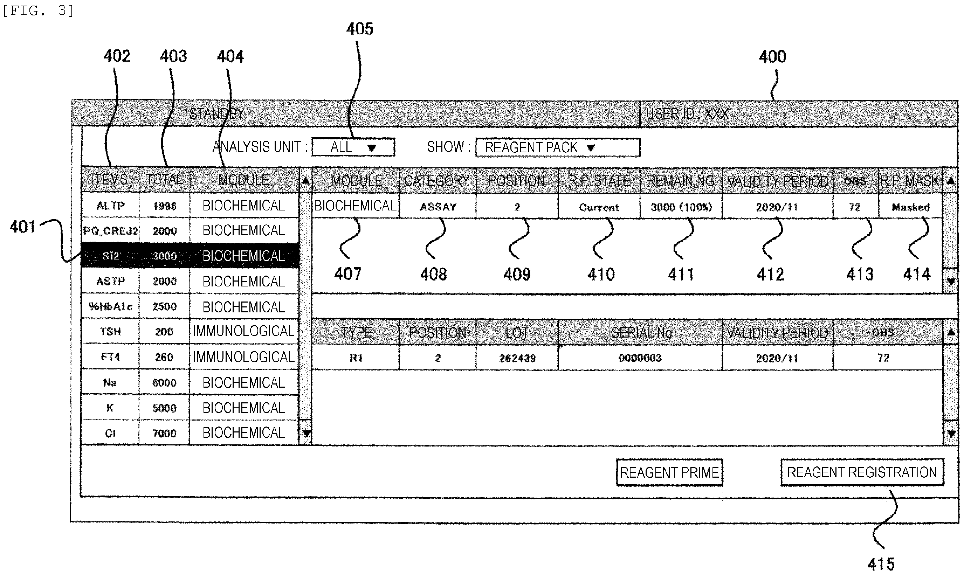

Next, the details of the display control of the screen displayed on the display section 116 of the automatic analysis device 100 according to the present example are described with reference to Fig. 3 and later.

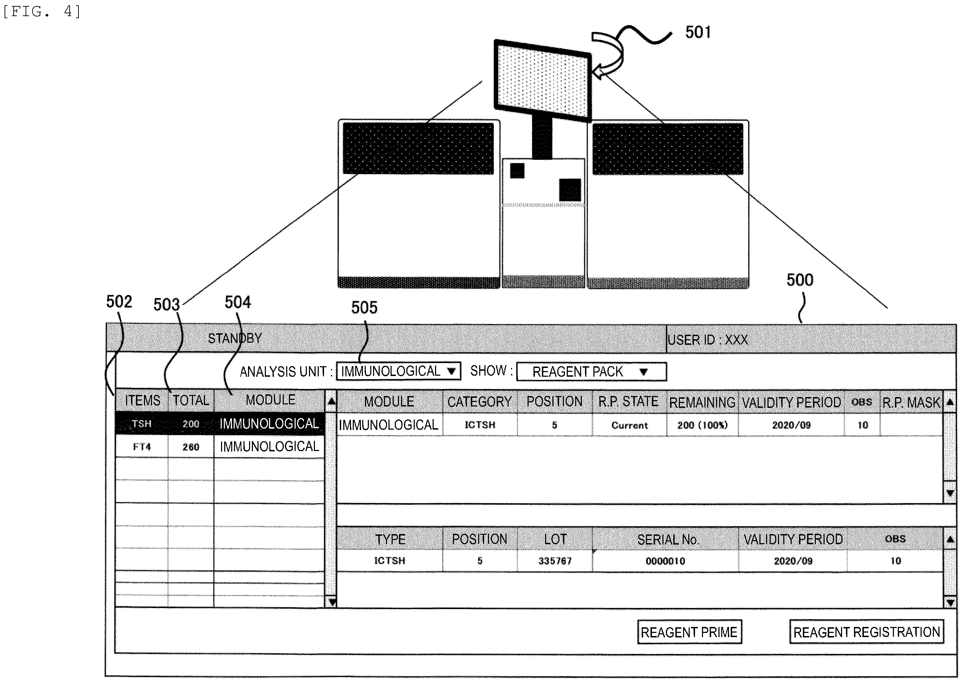

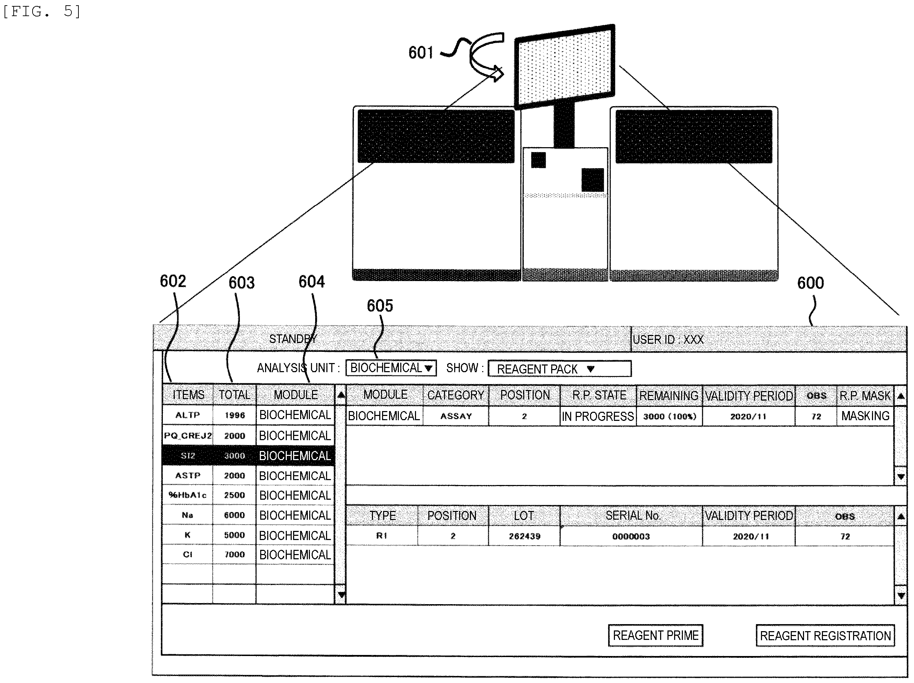

First, the details of the first screen and the second screen related to reagent information displayed on the display section 116 are described with reference to Figs. 3 to 5. Fig. 3 is a view illustrating the outline of the first screen on a reagent information display screen, Fig. 4 is a view illustrating the outline of the second screen related to the analysis module 207, and Fig. 5 is a view illustrating the outline of the second screen related to the analysis module 107.

The reagent information display screen shown in Figs. 3 to 5 is displayed by pressing a reagent button (not illustrated) from the global menu displayed after logging in to the system.

A reagent information display screen 400 in Fig. 3 is a screen for displaying information on the reagent mounted on the respective analysis modules 107 and 207 and corresponds to the first screen.

In the reagent information display screen 400 shown in Fig. 3, names 402 of all reagents currently registered, remaining amounts 403, and target module names 404 are displayed as reagent lists on the left side of the screen.

One on the reagent list is clicked and a module name 407, a reagent category 408, a mounting position 409, a reagent usage priority 410, a remaining amount 411 of the reagent, a validity period 412, the number of validity days 413, and the presence or absence of a mask 414 registered for the reagent 401 in focus are displayed in the right table as a reagent detail list.

In fact, a user checks the registered remaining amount and validity period of the reagents and registers the reagents by opening the reagent information display screen 400.

In addition, when newly registering or additionally registering reagents to the device, the top covers 141 and 241 of the analysis modules 107 and 207 corresponding to the reagents are opened, reagents are loaded, and reagents are registered on the system by pressing a reagent registration button 415 in Fig. 3.

By default, the display range when the reagent information display screen 400 starts is for all analysis modules, and reagent information of both the immunological analysis module 207 and the biochemical analysis module 107 is displayed on the screen.

In the case of using a specific analysis module 107 or analysis module 207 alone as a target, the reagent information of the module as non-target is not required, and displaying the reagent information as non-target may lead to malfunction.

At present, a combo box 405 is present as a method for switching a display range for each analysis module. In the combo box 405, "all modules", "biochemical analysis module", and "immunological analysis module" are assigned as items, and filtering for displaying information in a range corresponding to the selected analysis module can be performed. Consequently, malfunction in the reagent registration caused by discrepancies in the analysis modules can be prevented.

Here in the current system, in order to check the remaining amount of reagents related to a specific analysis module and to additionally register reagents that are insufficient, the reagent information display screen 400 is opened with the display section 116 facing the front, the combo box 405 is selected by using the input device 117, and information related to a target analysis module is selected as a display range. After moving to the front of the target analysis module and replacing the insufficient reagent, the reagent is registered from the reagent registration button 415 by operating the input device 117 again.

Also, when checking reagent information of other modules from this state, the reagent information of all modules cannot be displayed without moving to the front of the input device 117 again and clicking the "all modules" item from the combo box 405.

In contrast, in the present invention, when the display section 116 faces the front (for example, when the angle detected by the angle detector 121 is 0°), the control section 114 executes control for displaying information on both the immunological analysis module 207 and the biochemical analysis module 107 as the first screen, and eliminates the trouble of the user moving and pressing the combo box 405, as shown in Fig. 3.

In Fig. 4, as shown in a rotation action 501, when the user instructs the reagent information display screen to be displayed while the display section 116 is rotated 30° or more toward the immunological analysis module 207 side, or when the display section 116 is rotated in the direction indicated by the rotation action 501 while the reagent information display screen 400 is already displayed, the control section 114 displays a reagent information display screen 500 for displaying only reagent information corresponding to the immunological analysis module 207 as shown in Fig. 4 on the display section 116.

In the reagent information display screen 500 shown in Fig. 4, unlike the reagent information display screen 400 shown in Fig. 3, reagent information on the biochemical analysis module 107 is not displayed, and only the reagent information on the immunological analysis module 207 is displayed. The reagent information display screen 500 corresponds to the second screen.

As shown in Fig. 4, with rotation, a combo box 505 automatically switches to the contents of the immunological analysis module 207, and only information on the immunological analysis module 207 is displayed in a module reagent name 502, a remaining amount 503, and a target module name 504.

In addition, in Fig. 5, when the user instructs the reagent information display screen to be displayed while the display section 116 is rotated 30° or more toward the biochemical analysis module 107 side as shown in a rotation action 601, or when the display section 116 is rotated in the direction indicated by the rotation action 601 while the reagent information display screen 400 is already displayed, the control section 114 displays a reagent information display screen 600 for displaying only the reagent information corresponding to the biochemical analysis module 107 as shown in Fig. 5 on the display section 116.

As shown in Fig. 5, with rotation, a combo box 605 automatically shows the contents of the biochemical analysis module 107, and only information on the biochemical analysis module 107 is displayed in a module reagent name 602, a remaining amount 603, and a target module name 604.

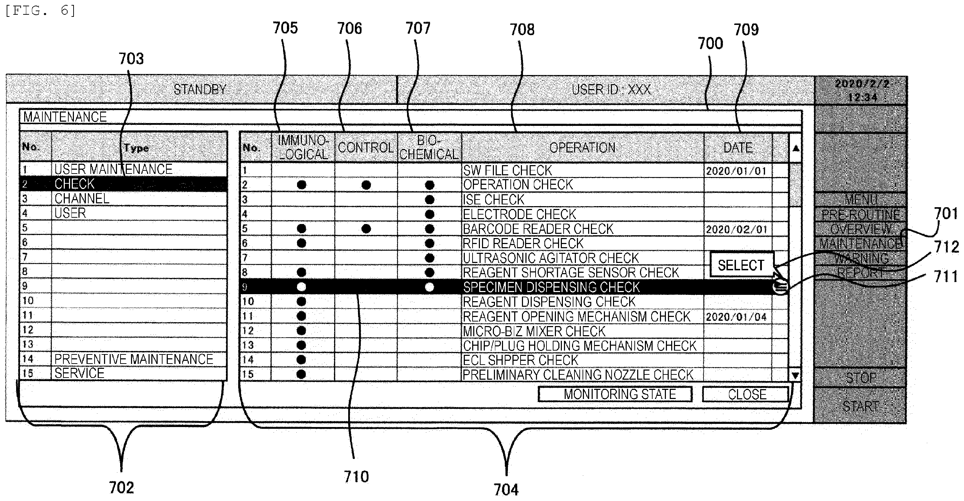

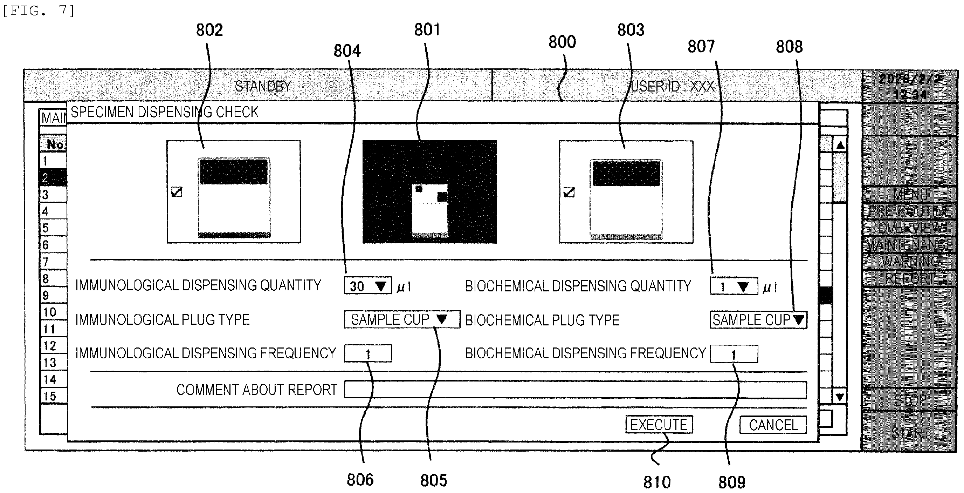

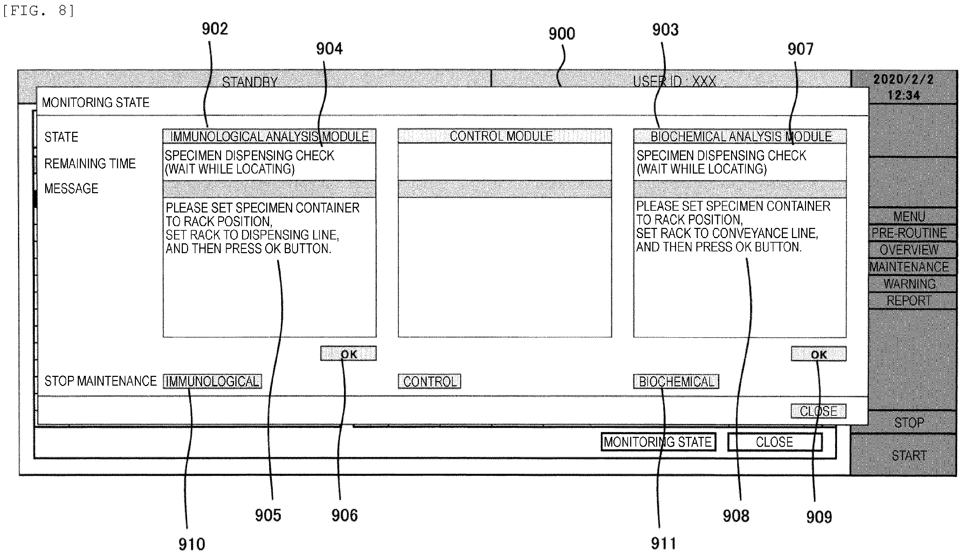

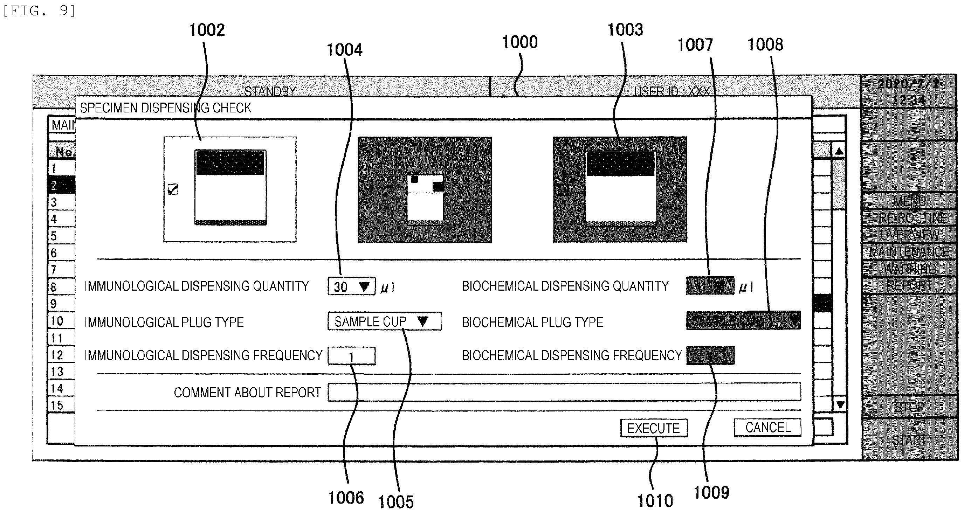

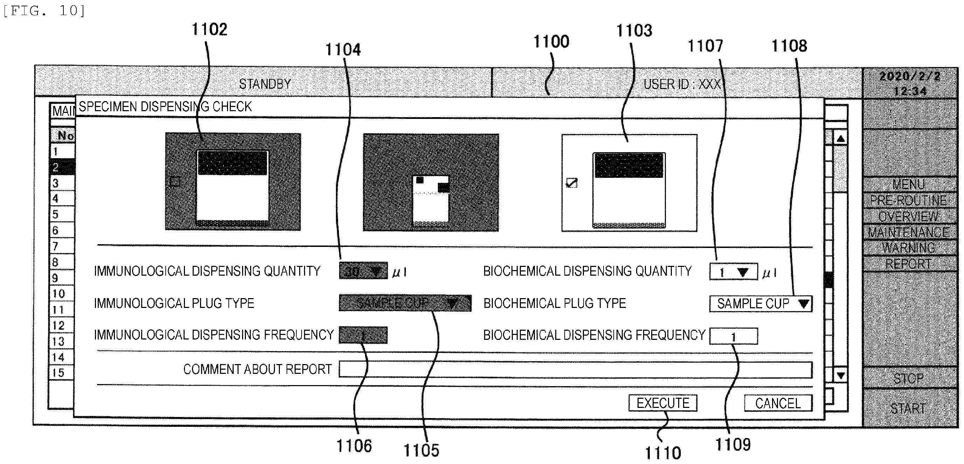

Next, the details of the first screen and the second screen related to maintenance displayed on the display section 116 are described with reference to Figs. 6 to 10. Fig. 6 is a view illustrating the outline of the maintenance screen, Fig. 7 is a view illustrating the outline of the first screen on the maintenance screen of a specimen dispensing nozzle, Fig. 8 is a view illustrating the outline of the first screen of the state monitoring screen of the specimen dispensing nozzle, Fig. 9 is a view illustrating the outline of the second screen related to the maintenance of the specimen dispensing nozzle of the analysis module 207, and Fig. 10 is a view illustrating the outline of the second screen related to the maintenance of the specimen dispensing nozzle of the analysis module 107.

A maintenance item display screen 700 shown in Fig. 6 is a screen displayed by pressing a maintenance button 701 disposed in a global area after system login. In Fig. 6, a maintenance item corresponding to one maintenance type in focus by selecting from a list 702 indicating the type of maintenance by using the input device 117 is displayed in a table 704. In the case of Fig. 6, the items corresponding to the maintenance are displayed in the table 704 since a check maintenance 703 is in focus.

In the table 704, module information 705 and 707 as a target of each maintenance item, device information 706, name 708, and last execution date and time 709 are displayed. In the module information 705 and 707 and the device information 706, • is written in a module field as a target of each maintenance item in a column section.

For example, for specimen dispensing check maintenance 710, the biochemical analysis module 107 and the immunological analysis module 207, are used, and the control device 300 is not used. Also, the last execution date and time 709 is updated every time maintenance is executed. In order to execute maintenance, a menu button 711 shown by the specimen dispensing check maintenance 710 being clicked to be in focus by the input device 117 is pressed, and a pop-up menu 712 is selected to transition to each maintenance execution screen.

In the case of Fig. 6, if the pop-up menu 712 is pressed, the specimen dispensing check maintenance is in focus, and therefore a specimen dispensing check maintenance execution screen 800 shown in Fig. 7 is displayed.

The specimen dispensing check maintenance execution screen 800 in Fig. 7 is a screen for setting and executing specimen dispensing check maintenance execution.

The specimen dispensing check maintenance can be set on an analysis module basis. For example, a check box 801 corresponding to the control device 300 is displayed as disabled because maintenance is not executed. In contrast, a check box 802 corresponding to the immunological analysis module 207 and a check box 803 corresponding to the biochemical analysis module 107 are enabled because maintenance can be executed.

The check boxes 802 and 803 are disabled by being unchecked, and no maintenance is executed for the modules that are unchecked.

As the settings for the immunological analysis module 207, there are a combo box 804 of dispensing quantity, a combo box 805 of plug type, and a designation box 806 of dispensing frequency. A combo box 807 of dispensing quantity, a combo box 808 of plug type, and a designation box 809 of dispensing frequency are similarly provided as settings for the biochemical analysis module 107.

The combo boxes 804, 805, 807, and 808 can be set by using combo boxes, and designation boxes 806 and 809 can be set by using text boxes.

Also, the combo boxes 804 and 805, and the designation box 806 are disabled when the check box 802 is unchecked, and the combo boxes 807 and 808, and the designation box 809 are disabled when the check box 803 is unchecked. After the setting is finished, the specimen dispensing check maintenance is executed when an execution button 810 is pressed.

Also, it is desirable that the specimen dispensing check maintenance is interactive maintenance, and if the execution button 810 is pressed on the display section 116, a state monitoring screen 900 as shown in Fig. 8 is displayed and an instruction from the system is displayed.

In Fig. 8, a field 902 shows a detailed state 904 indicating the progress status during the maintenance of the immunological analysis module 207, a specific instruction text 905, and an instruction confirmation button 906, and a field 903 shows a detailed state 907 indicating the progress status during the maintenance of the biochemical analysis module 107, a specific instruction text 908, and an instruction confirmation button 909.

If the maintenance needs to be stopped in the middle, maintenance stop buttons 910 and 911 of each analysis module are pressed.

The maintenance item display screen 700 shown in Fig. 6, the specimen dispensing check maintenance execution screen 800 shown in Fig. 7, and the state monitoring screen 900 shown in Fig. 8 correspond to the first screen, and as shown in the respective drawings, information on both the immunological analysis module 207 and the biochemical analysis module 107 is displayed together.

Here, in a conventional automatic analysis device, when executing maintenance on a specific analysis module alone, the user had to uncheck the check boxes 801, 802, and 803 in advance and press the execution button 810.

In contrast, when a pop-up menu 712 is selected from the user while the display section 116 is rotated 30° or more toward the immunological analysis module 207 side, or when the display section 116 is rotated 30° or more toward the immunological analysis module 207 side while the specimen dispensing check maintenance execution screen 800 is already displayed, as shown in Figs. 9 and 10, a specimen dispensing maintenance execution screen 1000 for displaying only maintenance information corresponding to the immunological analysis module 207 as shown in Fig. 9 is displayed on the display section 116 as the second screen without user unchecking the check boxes of the analysis modules as non-target.

In a specimen dispensing maintenance execution screen 1000 shown in Fig. 9, a check box 1002 corresponding to the immunological analysis module 207 is enabled, and combo boxes 1004 and 1005, and a designation box 1006 are also enabled, allowing the user to change the settings.

Meanwhile, in the specimen dispensing maintenance execution screen 1000, a check box 1003 reflecting the biochemical analysis module 107 is disabled, and combo boxes 1007 and 1008, and a designation box 1009 are also disabled. Consequently, the biochemical analysis module 107 cannot be set.

If the maintenance execution button 1010 is pressed in the state shown in Fig. 9, the maintenance is executed only on the immunological analysis module 207, and the screen transitions to the state monitoring screen shown in Fig. 8, but in this case, only the maintenance state of the immunological analysis module 207 is enabled, and the detailed state 907, the instruction text 908, and the instruction confirmation button 909 are not displayed for the biochemical analysis module 107, and in Fig. 8, the display is similar to the field of the control module.

Also, even on the maintenance item display screen shown in Fig. 6, only maintenance items related to the immunological analysis module 207 can be displayed as the second screen.

In addition, when a pop-up menu 712 is selected from the user while the display section 116 is rotated 30° or more toward the biochemical analysis module 107 side, or when the display section 116 is rotated 30° or more toward the biochemical analysis module 107 side while the specimen dispensing check maintenance execution screen 800 is already displayed, the control section 114 displays a specimen dispensing maintenance execution screen 1100 for displaying only maintenance information corresponding to the biochemical analysis module 107 as shown in Fig. 10 on the display section 116 as the second screen.

In the specimen dispensing maintenance execution screen 1100, unlike the specimen dispensing maintenance execution screen 1000 shown in Fig. 9, a check box 1103 corresponding to the biochemical analysis module 107 is enabled, and combo boxes 1107 and 1108, and a designation box 1109 are also enabled, allowing the user to change the settings.

On the other hand, since a check box 1102 corresponding to the immunological analysis module 207 is disabled, and combo boxes 1104 and 1105, and a designation box 1106 are also disabled, settings related to the immunological analysis module 207 cannot be made.

If the maintenance execution button 1110 is pressed in the state shown in Fig. 10, maintenance is executed only on the biochemical analysis module 107 and the screen transitions to the state monitoring screen shown in Fig. 8, but in this case, the detailed state 904, the instruction text 905, and the instruction confirmation button 906 are not displayed for the immunological analysis module 207.

Also, only maintenance items related to the biochemical analysis module 107 can be displayed as the second screen even on the maintenance item display screen shown in Fig. 6 and the state monitoring screen shown in Fig. 8.

Here, a screen in which transition control between the first screen and the second screen described in the present example is suitable and a screen in which the transition control is not suitable are considered. The reagent information display screen illustrated in Figs. 3 to 5 and the maintenance screen illustrated in Figs. 7 to 10 are mentioned as screens suitable for switching control between the screens described in the present example. In these screens, the user can perform the screen operation at the same time as the operation on the hardware, and the trouble of the user going back and forth between the display section 116 and the target analysis module can be eliminated.

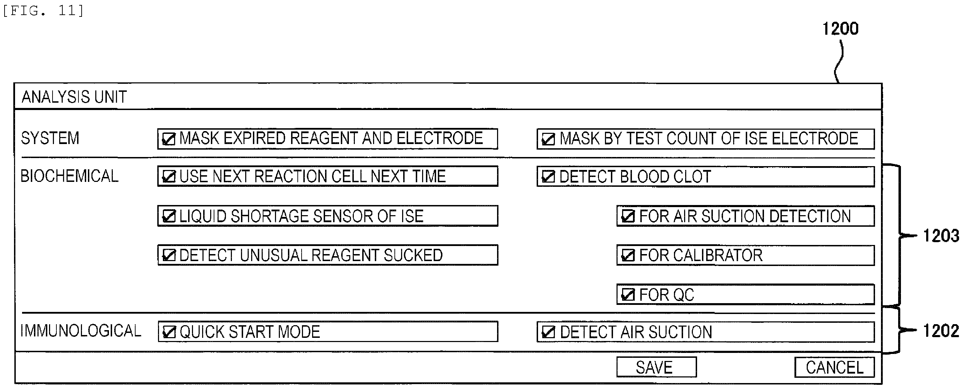

In contrast, a screen for setting the system itself can be mentioned as a screen which is not suitably applied. The setting screen of the system itself does not need the user to be in front of a specific analysis module, and if the setting is changed simply by operating the display section 116, malfunction may be caused. The following is illustrated with reference to Fig. 11. Fig. 11 is a view illustrating the outline of an analysis setting screen.

An analysis setting screen 1200 shown in Fig. 11 is a screen for setting the execution of liquid level detection and foam detection of reagents during analysis. Since the timing of operating the analysis setting screen 1200 is before the start of analysis, even in the case of performing analysis on a specific analysis module basis, the user is mostly only in front of the display section 116.

If transition control between the first screen and the second screen is applied to the analysis setting screen 1200, for example, when the display section 116 is tilted toward the immunological analysis module 207, all check boxes 1202 related to the immunological analysis module 207 are enabled, and all check boxes 1203 related to the biochemical analysis module 107 may be disabled.

However, unlike maintenance and reagents, easily changing the settings during analysis leads to incorrect settings in analysis. Also, as described above, the user is in the front of the display section 116, and the possibility of the operation of tilting or moving the display section 116 from the state is very low.

While the user is checking reagent information or the like of the module in front of the immunological analysis module 207 or the biochemical analysis module 107, the user may want to check the settings of any module during analysis. In such a case, it is not desirable that the settings during analysis are switched by transition control.

For these reasons, it is considered desirable that transition control between the first screen and the second screen is not applied to a screen for performing system settings such as the analysis setting screen 1200. Conversely, the effect of transition control between the first screen and the second screen is particularly effective in screens for which the user is assumed to be in front of a specific analysis module, such as a reagent-related screen or a maintenancerelated screen.

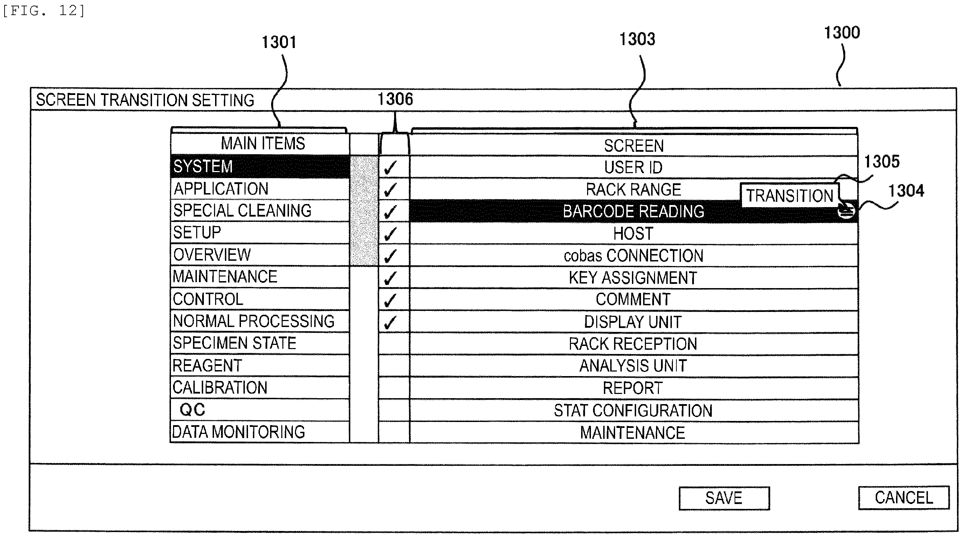

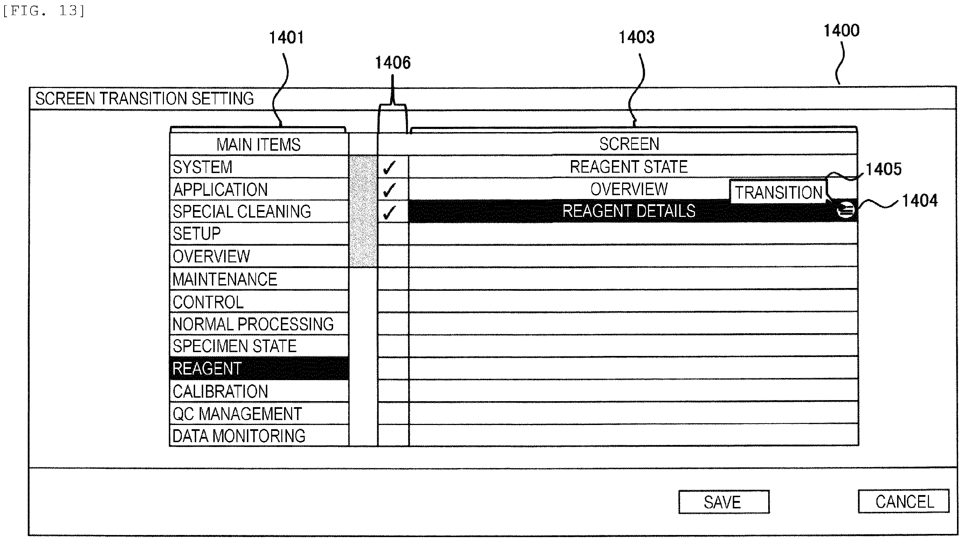

Accordingly, it is desirable to set a screen in which transition control between the first screen and the second screen is applied and a screen in which the transition control is not applied. A screen transition setting screen like this is described with reference to Figs. 12 and 13. Fig. 12 is a view illustrating the outline of the screen transition setting screen, and Fig. 13 is a view illustrating the outline of the screen transition setting screen.

Among a screen transition setting screen 1300 shown in Fig. 12 and a screen transition setting screen 1400 shown in Fig. 13, lists 1301 and 1401 display the items divided into main items, and a total of 13 main items such as a system screen and an application screen are displayed. If one of the items is clicked, the item is in focus, and lists 1303 and 1403 of the screens of the items in focus are displayed.

Furthermore, by clicking the detailed setting items from the screen list, the items are in focus, and menu buttons 1304 and 1404 and screen transition setting buttons 1305 and 1405 are displayed. When the screen transition setting buttons 1305 and 1405 are pressed, columns 1306 and 1406 are checked, and the screen of the items is a screen to which transition control between the first screen and the second screen is adapted. Also, only the checked columns 1306 and 1406 can be sorted.

In Fig. 12, since a barcode reading setting screen of the system is in focus, when the menu button 1304 is pressed and the screen transition setting button 1305 is pressed, the barcode reading setting screen of the column 1306 is checked, and transition control between the first screen and the second screen is adapted to the barcode reading setting screen.

In addition, in the example shown in Fig. 13, since the reagent detail screen of the reagent is in focus, when the menu button 1404 is pressed and the screen transition setting button 1405 is pressed, the barcode reading setting screen of the column 1406 is checked, and transition control between the first screen and the second screen is adapted to the reagent detail screen.

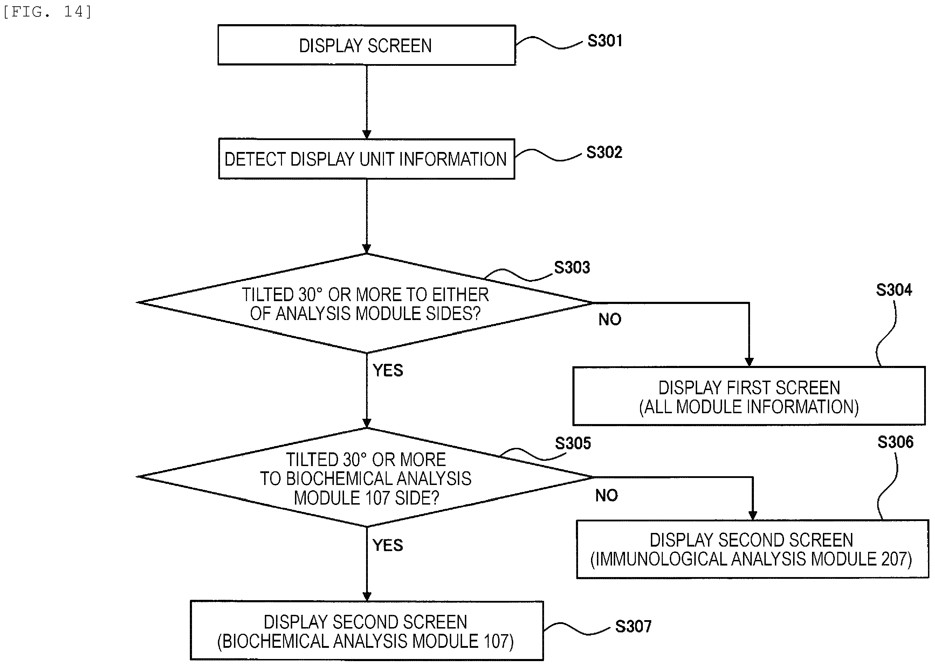

Next, the display method in the display section 116 according to the present example is described with reference to Fig. 14. Fig. 14 is a flowchart showing the flow from the start of the screen to the display of the first screen or the second screen.

As shown in Fig. 14, a screen to be adapted is displayed or started from a point of time already displayed (step S301). Each of the following steps will be executed at every specific time interval during the operation of the device.

First, the angle detector 121 acquires angle information of the display section 116 (step S302).

Next, the control section 114 determines whether or not the display section 116 is tilted by 30° or more toward either the biochemical analysis module 107 side or the immunological analysis module 207 side (step S303). When it is determined that the display section 116 is not tilted toward any module side by 30° or more, processing is advanced to step S304, and the first screen which is all module information is displayed on the display section 116 (step S304).

In contrast, when it is determined in step S303 that the display section 116 is tilted toward one of the modules by 30° or more, the control section 114 determines whether or not the display section 116 is tilted toward the biochemical analysis module 107 by 30° or more (step S305).

When it is determined that the display section 116 is tilted toward the biochemical analysis module 107 by 30° or more, it is considered that the biochemical analysis module 107 needs to be used alone, and therefore the control section 114 displays the second screen showing information on the biochemical analysis module 107 (step S307).

In contrast, when it is determined that the display section 116 is not tilted toward the biochemical analysis module 107 side, the display section 116 is tilted toward the immunological analysis module 207 side, and it is considered that the immunological analysis module 207 needs to be used alone, and therefore the control section 114 displays the second screen showing information on the immunological analysis module 207 (step S306).

Next, the effect of the present example is described.

The automatic analysis device 100 of Example 1 of the present invention described above includes two or more analysis modules 107 and 207 for analyzing a specimen, the display section 116 for displaying information of the analysis modules 107 and 207, and the control section 114 for controlling the operation of the analysis modules 107, 207, and the display section 116, and the control section 114 displays the first screen for displaying information of at least two analysis modules 107 and 207 and the second screen for displaying information of only a specific analysis module 107 or 207 among the analysis modules 107 and 207 separately based on the angle information of the display section 116.

According to such a configuration, since the first and second screens can be easily transitioned, depending on the situation, the display range can be switched from a specific module target to a plurality of module targets, and the configuration from information on the specific module to information on the whole device can be confirmed instantly.

In particular, in the integrated automatic analysis device integrated with a plurality of kinds of analysis modules, a display section for displaying information on analysis corresponding to each analysis module is shared, and is suitable for the automatic analysis device.

In particular, when the angle detector 121 for detecting the angle of the display section 116 is also provided and the control section 114 displays the first screen and the second screen separately based on the angle information detected by the angle detector 121, since the display section 116 only needs to be tilted a predetermined angle or more, the second screen for displaying information on a specific module and the first screen for displaying the whole information are switched without performing a complicated screen transition operation.

Consequently, when the user performs the work on a specific module without having to move from the front of the target module, the work can be performed in a state a screen in which the information with low importance is not described and which is likely to be understood by the user and prevent malfunction is displayed. Accordingly, for example, the erroneous take of reagents of another module or the like can be prevented, and the burden on the user can be greatly reduced compared to the conventional one. Also, when the information of all modules needs to be checked again, since the first screen is displayed only by turning the display section 116 to the front, the act of manually selecting the display range from the combo box described above can be omitted, and the burden on the user can be greatly reduced.

Further, since the control section 114 displays a setting screen for selecting between a screen in which the first screen and the second screen are displayed separately and a screen in which the first screen and the second screen are displayed together, the user can optionally set a screen for transitioning between the first screen and the second screen, the screen transition setting can be disabled for a screen such as an analysis setting screen that is not suitable for adapting transition control, and the stability of the operation of the device can be enhanced.

Also, the control section 114 displays maintenance information including the progress status of the maintenance of the analysis modules 107 and 207 on the first screen and displays maintenance information including the progress status of the maintenance of a specific analysis module 107 or 207 on the second screen.

In the case of executing maintenance on a specific analysis module as a target, for example, when executing specimen dispensing check maintenance, it is assumed that the user has to perform an operation on the target analysis module, such as installing a rack in the dispensing lines 109 and 209 of each module and is in front of the target analysis module.

In any case of Figs. 9 and 10, since the maintenance screen of the target module is displayed only by tilting the display section 116, the trouble of the user moving from the front of the target module can be eliminated. When the information of all modules needs to be checked again, the first screen can be displayed by tilting the display section 116 to the control section 114 side, and the act of manually selecting the display range from the combo box can also be eliminated.

Further, when the information of the immunological analysis module 207 is needed while using the biochemical analysis module 107, an effect such that the information of the immunological analysis module 207 can be easily viewed by turning the display section 116 to the front is obtained.

Further, by displaying at least one of the reagent information among the remaining amount of the reagent required for analysis, the validity period of the reagent, and the target module using the reagent on the first screen and second screen, the control section 114 can display information required for the user to access a specific analysis module on a large screen and the second screen, assisting the user in the work more effectively.

### <Example 2>

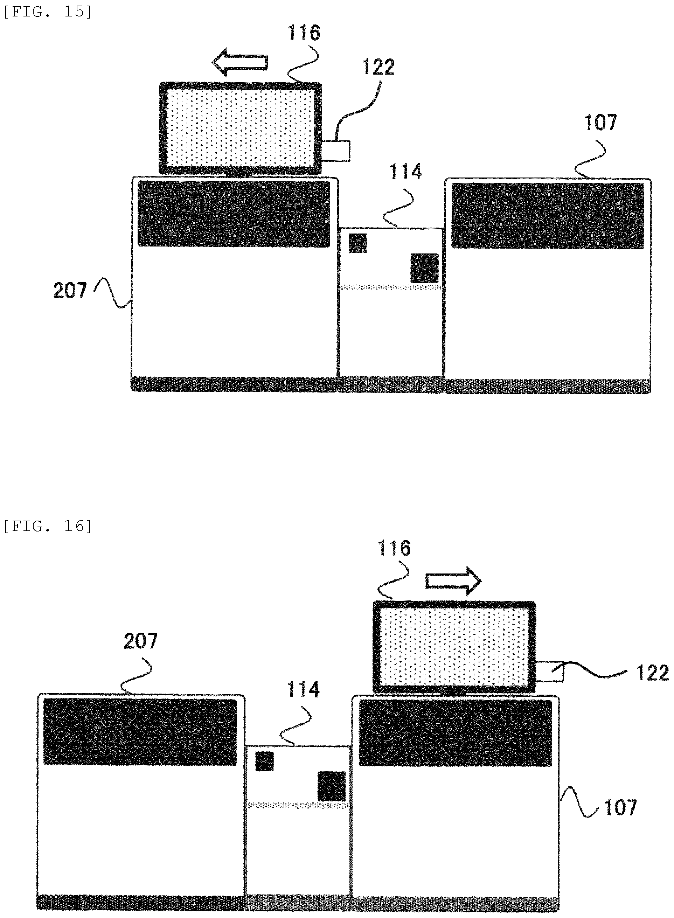

An automatic analysis device, a display system of the automatic analysis device, and a display method in the automatic analysis device of Example 2 of the present invention are described with reference to Figs. 15 and 16.

The same configuration is denoted by the same symbol as in Example 1, and the description thereof is omitted. The same will apply in the following example.

In Example 1, a form in which the control section 114 executes transition control based on the angle information of the display section 116 is described, but the present invention is not limited to the angle information of the display section 116, the first screen for displaying information of two analysis modules 107 and 207 and the second screen for displaying information of only a specific analysis module 107 or 207 among the analysis modules 107 and 207 can be displayed separately based on the position information of the display section 116.

The following is described with reference to Figs. 15 and 16. Fig. 15 is a view illustrating a method for transitioning to the second screen related to the analysis module 207 in the automatic analysis device according to Example 2, and Fig. 16 illustrates a method of transitioning to the second screen related to the analysis module 107.

In the present example, the display section 116 is configured so as to be rotatable or to be moved in parallel to the analysis modules 107 and 207 sides. The configuration of parallel movement may be a known configuration, for example, a rail or the like can be used.

Also, as shown in Figs. 15 and 16, a position detector 122 for detecting the position of the display section 116 is provided, and the control section 114 displays the first screen and the second screen separately based on the position information detected by the position detector 122.

For example, when the display section 116 is moved to the upper part of the immunological analysis module 207 as shown in Fig. 15, the display section 116 is made to correspond to the immunological analysis module 207 and when the display section 116 is moved to the upper part of the biochemical analysis module 107 as shown in Fig. 16, the display section is made to correspond to the biochemical analysis module 107.

In other words, when the display section 116 is located on the upper part of the sampler module 200, information on all modules is displayed as the first screen, when the display section 116 is moved to the upper part of the immunological analysis module 207, only information on the immunological analysis module 207 is displayed as the second screen, and when the display section 116 is moved to the upper part of the biochemical analysis module 107, only information on the biochemical analysis module 107 is displayed.

Other configuration/operation are substantially the same configuration/operation as the automatic analysis device, the display system of the automatic analysis device, and the display method in the automatic analysis device of Example 1 described above, and the details are omitted.

As in Example 2 of the present invention, the control section 114 displays the first screen for displaying the information of the two analysis modules 107 and 207 and the second screen for displaying only a specific analysis module 107 or 207 among the analysis modules 107 and 207 separately based on the position information of the display section 116, in particular, when the position detector 122 for detecting the position of the display section 116 is provided, and the control section 114 displays the first screen and the second screen separately based on the position information detected by the position detector 122, an effect similar to that of Example 1 can be obtained.

### <Example 3>

An automatic analysis device, a display system of the automatic analysis device, and a display method in the automatic analysis device of Example 3 of the present invention are described.

In the present example, a first screen for displaying information of two analysis modules 107 and 207 and a second screen for displaying information of only a specific analysis module 107 or 207 among the analysis modules 107 and 207 are displayed separately based on the information of the user's operations on the analysis modules 107 and 207, instead of the information of the display section 116 as in Examples 1 and 2 described above.

In the present example, it goes without saying that the first screen for displaying information of two analysis modules 107 and 207 and the second screen for displaying information of only a specific analysis module 107 or 207 among the analysis modules 107 and 207 can be displayed separately by using the information on the display section 116 as in Examples 1 and 2.

In the present example, the analysis modules 107 and 207 have an analysis section for analyzing a specimen, a protection section for protecting the analysis section such as the top covers 141 and 241 covering the upper parts of the analysis modules 107 and 207, and an operation detection section for detecting that a predetermined operation is performed on the analysis section or the protection section.

As the operation detection section, for example, as shown in Fig. 2, the opening/closing detectors 142 and 242 for detecting the opening of the top covers 141 and 241 can be mentioned, and in this case, the control section 114 associates the opening and closing of the top covers 141 and 241 of respective analysis modules 107 and 207 with the reagent information display screens 400, 500, and 600 shown in Fig. 4 and the like, and displays the first screen and the second screen based on the opening and closing information detected by the opening/closing detectors 142 and 242.

As a situation in which the reagent information display screens 400, 500, and 600 shown in Fig. 4 or the like described in Example 1 are displayed, a scene of reagent replacement is assumed. Reagent replacement is executed by the opening top covers 141 and 241 of the analysis modules 107 and 207 as a target of the reagent replacement when the module state is in standby.

After the reagent is actually replaced, the user opens the reagent information display screen and registers the replaced reagent by operating the reagent registration button 415.

In light of the flow of the work, when the reagent is replaced, the top covers 141 and 241 are opened, and the reagent information display screen is displayed in this state. In other words, when the top covers 141 and 241 are opened and the reagent information display screen is displayed at the same time, it is not necessary for the user to manually display the reagent information display screen. Further, since the displayed reagent information display screen is the screen of the corresponding analysis module, it is not necessary for the user to set the display range by using the combo box as in Example 1.

Accordingly, when the reagent information display screen 400 is displayed, the reagent information display screen 600 shown in Fig. 5 is displayed when the top cover 141 of the biochemical analysis module 107 is opened, and the reagent information display screen 500 shown in Fig. 4 is displayed when the top cover 141 of the immunological analysis module 207 is opened.

Also, when the top covers 141 and 241 of both the biochemical analysis module 107 and the immunological analysis module 207 are opened within a predetermined time, or when the other top cover is opened with one top cover open, it is desirable to display the reagent information display screen 400 as the first screen.

Further, as a timing for suitably adapting the transition control of the screen based on the opening and closing of the top covers 141 and 241, as long as it does not take longer than necessary to replace the reagent, since the replacement work is completed, it is assumed to be within the predetermined time from the moment the top covers 141 and 241 are opened. Accordingly, even when the top covers 141 and 241 continue to be opened after the predetermined time, the first screen can be displayed.

Although the display of the screen does not need to be associated with the detection information that the top covers 141 and 241 are closed, the first screen can be displayed in the same way as when the predetermined time elapses when the closing is detected.

In addition, in the present example, the control section 114 displays the first screen and the second screen separately based on the state of the analysis modules 107 and 207 in addition to the opening and closing information detected by the opening/closing detectors 142 and 242. A module state indicates a state related to the whole device, and a plurality of states are defined, such as standby at normal time and operation during analysis. In a predetermined module state, a specific screen can be displayed when the user performs a predetermined operation on the analysis module.

Other configuration/operation are substantially the same configuration/operation as the automatic analysis device, the display system of the automatic analysis device, and the display method in the automatic analysis device of Example 1 described above, and the details are omitted.

As in Example 3 of the present invention, when the control section 114 displays the first screen for displaying information of two analysis modules 107 and 207 and the second screen for displaying information of only a specific analysis module 107 or 207 among the analysis modules 107 and 207 based on the information of the operation performed on the analysis modules 107 and 207, in particular, when the analysis modules 107 and 207 include an analysis section for analyzing a specimen, a protection section for protecting the analysis section, and an operation detection section for detecting that a predetermined operation is performed on the analysis section or the protection section, for example, the analysis modules 107 and 207 include the top covers 141 and 241 covering the upper parts of the analysis modules 107 and 207 as protection sections and the opening/closing detectors 142 and 242 for detecting opening and closing of the top covers, and the control section 114 displays the first screen and the second screen separately based on the information of the operation detected by the operation detection section, an effect similar to that of Example 1 can be obtained.

In addition to the operation information detected by the operation detection section, the control section 114 displays the first screen and the second screen separately based on the state of the analysis modules 107 and 207, thereby improving user convenience.

In the present example, the case of associating the opening and closing information of the top covers 141 and 241 with the reagent information display screen is described, but in addition, when the user operates the reaction disk 118, the reagent disk 119, the reagent dispensing mechanism 120, and the like, a screen corresponding to either mechanism can be displayed.

### <Other>

The present invention is not limited to the above examples and includes various modification examples. The above-described examples have been described in detail for easy understanding of the present invention, and are not necessarily limited to those having all the configurations described.

A part of the configuration of one example can be replaced with the configuration of another example, and the configuration of another example can be added to the configuration of one example. It is possible to add, delete, and replace other configurations for a part of the configuration of each example.

For example, transition control between the first screen and the second screen of Examples 1 to 3 is not limited to the case of being executed by the control section 114 in the control device 300 in the automatic analysis device 100, but can also be executed in a laboratory information system (LIS) as the upper system of the automatic analysis device 100, or a hospital information system (HIS) as the system used by a clinical side and the system located at the upper level of an LIS 20.

In such a case, the LIS and the HIS function as display systems of an automatic analysis device or the like, and a first screen display signal displaying information of two analysis modules 107 and 207 and a second screen display signal displaying information of only a specific analysis module 107 or 207 among the analysis modules 107 and 207 are output to the display section 116 based on at least one information among the position information of the display section 116 for displaying information of the analysis modules 107 and 207, the angle information of the display section 116, and the information of the operation performed on the analysis modules 107 and 207.

### Reference Signs List

100: automatic analysis device
101: specimen rack
101A: emergency specimen rack
102: specimen rack supply section
103: specimen rack storage section
104: conveyance line
105: specimen identification device
106: rack rotor
106a, 106b: slot
107: biochemical analysis module
108, 208: specimen dispensing mechanism
109, 209: dispensing line
110, 210: specimen identification device
112: emergency specimen rack charging section
113: emergency specimen rack standby area
114: control section
115: storage section
116: display section
117: input device
118, 218: reaction disk
119, 219: reagent disk
120, 220: reagent dispensing mechanism
121: angle detector
122: position detector
141, 241: top cover
142, 242: opening/closing detector
200: sampler module
207: immunological analysis module
300: control device
400: reagent information display screen (first screen)
401: reagent
402, 502, 602: name
403, 503, 603: remaining amount
404, 504, 604: target module name
405, 505, 605: analysis module specific display range switching combo box
407: corresponding analysis module name
408: reagent category
409: mounting position
410: reagent usage priority
411: remaining amount of reagent
412: validity period
413: the number of validity days
414: presence or absence of mask
415: reagent registration button
500, 600: reagent information display screen (second screen)
501, 601: rotation action
700: maintenance item display screen (first screen)
701: maintenance button
702: list
703: check maintenance
704: check maintenance item list
705: immunological analysis module information
706: control device information
707: biochemical analysis module information
708: check maintenance item name
709: last maintenance date and time
710: specimen dispensing check maintenance
711: menu button
712: pop-up menu
800: specimen dispensing check maintenance execution screen (first screen)
801: control module check box
802, 1002, 1102: immunological analysis module check box
803, 1003, 1103: biochemical analysis module check box
804, 1004, 1104: dispensing quantity combo box (immunological analysis module)
805, 1005, 1105: dispensing plug combo box (immunological analysis module)
806, 1006, 1106: dispensing frequency designation box (immunological analysis Module)
807, 1007, 1107: dispensing quantity combo box (biochemical analysis module)
808, 1008, 1108: dispensing plug combo box (biochemical analysis module)
809, 1009, 1109: dispensing frequency designation box (biochemical analysis module)
810, 1010, 1110: execution button
900: state monitoring screen (second screen)
902: immunological analysis module monitoring field
903: biochemical analysis module monitoring field
904: detailed state (immunological analysis module)
905: instruction text (immunological analysis module)
906: instruction confirmation button (immunological analysis module)
907: detailed state (biochemical analysis module)
908: instruction text (biochemical analysis module)
909: instruction confirmation button (biochemical analysis module)
910: maintenance stop button (immunological analysis module)
911: maintenance stop button (biochemical analysis module)
1000, 1100: specimen dispensing maintenance execution screen (second screen)
1200: analysis setting screen
1202: immunological analysis check box
1203: biochemical analysis check box
1300, 1400: screen transition setting screen (setting screen)
1301, 1401: screen main item list
1303, 1403: screen detailed item list
1304, 1404: menu button
1305, 1405: screen transition setting button
1306, 1406: screen transition valid check column

## Claims

1. An automatic analysis device comprising:
at least two or more analysis modules for performing specimen analysis;
a display section for displaying information of the analysis modules; and
a control section for controlling an operation of the analysis modules and the display section, wherein
the control section separately displays a first screen displaying information of at least the two analysis modules and a second screen for displaying information of only the specific analysis module among the analysis modules based on a least one piece of information among position information of the display section, angle information of the display section, and information of the operation performed on the analysis modules.

2. The automatic analysis device according to claim 1, wherein
the control section displays a setting screen for selecting between a screen in which the first screen and the second screen are displayed separately and a screen in which the first screen and the second screen are displayed together, on the display section.

3. The automatic analysis device according to claim 1, further comprising:
an angle detector for detecting an angle of the display section, wherein
the control section displays the first screen and the second screen separately based on angle information detected by the angle detector.

4. The automatic analysis device according to claim 1, further comprising:
a position detector for detecting a position of the display section, wherein
the control section displays the first screen and the second screen separately based on position information detected by the position detector.

5. The automatic analysis device according to claim 1, wherein
the analysis module includes an analysis section for analyzing the specimen, a protection section for protecting the analysis section, and an operation detection section for detecting a predetermined operation performed on the analysis section or the protection section, and
the control section displays the first screen and the second screen separately based on operation information detected by the operation detection section.

6. The automatic analysis device according to claim 5, wherein
the analysis module includes a top cover covering an upper part of the analysis module as the protection section and an opening/closing detector for detecting an opening of the top cover as the operation detection section.

7. The automatic analysis device according to claim 5, wherein
the control section displays the first screen and the second screen separately based on a state of the analysis modules in addition to the information of the operation detected by the operation detection section.

8. The automatic analysis device according to claim 1, wherein
the control section displays a residual amount of a reagent required for analysis, a validity period of the reagent, and reagent information of at least one of target modules using the reagent on the first screen and the second screen.

9. The automatic analysis device according to claim 1, wherein
the control section displays maintenance information including maintenance progress of the analysis module on the first screen, and displays maintenance information including maintenance progress of the specific analysis module on the second screen.

10. A display system of an automatic analysis device, wherein
the display system outputs a display signal to a display section of the automatic analysis device including at least two or more analysis modules for analyzing a specimen, and
a first screen display signal displaying information of at least the two analysis modules and a second screen display signal displaying information of only the specific analysis module among the analysis modules are output separately based on at least one piece of information among position information of a display section for displaying information of the analysis modules, angle information of the display section, and information of an operation performed on the analysis modules.

11. A display method in a display section of an automatic analysis device including at least two or more analysis modules for analyzing a specimen, the method comprising:
separately displaying a first screen display signal displaying information of at least the two analysis modules and a second screen display signal displaying information of only the specific analysis module among the analysis modules based on at least one piece of information among position information of a display section for displaying information of the analysis modules, angle information of the display section, and information of an operation performed on the analysis modules.
